# FASCICULE DE BREVET EUROPEEN

(11) **EP 2 837 212 B1**
(45) Date de publication et mention de la délivrance du brevet: **09.06.2021**
(21) Numéro de dépôt: 12762019.3
(22) Date de dépôt: 11.04.2012
(51) Int. Cl.: H04W 4/80, H04W 4/029, G06F 16/9537, G06Q 30/02, G06Q 30/06, H04W 4/02

(54) **PROCEDE DE COMMUNICATION D'UNE INFORMATION SPATIALEMENT LOCALISEE A UN TERMINAL MOBILE**
VERFAHREN ZUR ÜBERMITTLUNG EINES RÄUMLICH LOKALISIERTEN INFORMATIONSELEMENTS AN EINEN ENDGERÄT
METHOD OF COMMUNICATION OF AN ITEM OF SPATIALLY LOCALIZED INFORMATION TO A MOBILE TERMINAL

(43) Date de publication de la demande: 18.02.2015
(73) Titulaire: SES-imagotag, 92000 Nanterre (FR)
(72) Inventeur: BOTTINE, Philippe, F-92100 Boulogne-Billancourt (FR); ROBIN, François, F-75116 Paris (FR)
(74) Mandataire: Regimbeau
(86) Numéro de dépôt international: PCT/FR2012/050791
(87) Numéro de publication internationale: WO 2013/153290

(56) Documents cités:
- WO-A1-2006/035315
- US-A1- 2005 021 561
- US-A1- 2006 149 635
- US-A1- 2006 169 772
- US-A1- 2007 131 764

## Description

### DOMAINE TECHNIQUE GENERAL ET CONTEXTE DE L'INVENTION

La présente invention concerne de manière générale l'affichage d'informations dans une surface de vente.

L'affichage d'informations relatives à des articles présentés à la vente dans une surface de vente se fait généralement au moyen d'étiquettes affichant notamment le prix de l'article auquel une étiquette est associée, ainsi que d'autres informations telles que le prix au poids, etc...

La nécessité de disposer d'un affichage d'informations à jour a justifié l'implantation dans de nombreuses surfaces de vente d'étiquettes électroniques disposant d'un écran sur lequel l'affichage d'informations est commandé à distance.

L'utilité de tels systèmes est essentiellement de permettre, au niveau des rayonnages d'un site tel qu'un supermarché, hypermarché ou toute autre surface de vente, de présenter au consommateur, pour chaque article présenté à la vente, un prix correspondant de façon fiable au prix tel qu'il figure dans le fichier central du site, c'est-à-dire au prix tel qu'il sera effectivement utilisé en caisse pour le paiement de l'article.

Un autre avantage de ces systèmes connus est de permettre de réaliser des changements de prix automatisés dans des délais beaucoup plus courts qu'avec un affichage manuel, que ce soit pour des périodes particulières de promotion sur le site, pour tout ou partie des articles présentés à la vente, pour répercuter des changements de tarifs, pour faire face à des situations d'inflation où les prix doivent être augmentés très fréquemment, etc...

D'autre part, il existe en matière d'affichage de prix de nombreuses contraintes, notamment légales, quant à la nature des prix affichés (prix unitaire, prix promotionnel, etc...), qui doivent être respectés par les systèmes électroniques de la même manière que par les affichages papier.

Ainsi les systèmes d'étiquettes électroniques, bien qu'ils tendent à devenir de plus en plus sophistiqués au fil du temps, restent toutefois relativement rigides quant aux différentes possibilités d'affichage, et quant à l'organisation temporelle et spatiale de ces différentes possibilités.

En outre, ces étiquettes électroniques permettent seulement d'afficher des informations relatives à l'article auxquels chacune d'entre elle est associée, et qui plus est, des informations généralement circonscrites au prix affiché par les étiquettes.

De plus, le consommateur est aujourd'hui livré à lui-même dans une surface de vente face à des informations relatives aux seuls articles. Il lui revient de naviguer à travers ces informations pour y trouver celles qui lui sont pertinentes. De fait, dans une surface de vente présentant généralement plusieurs milliers d'articles, trouver un article pertinent peut se révéler très compliqué.

En outre, l'émergence du commerce électronique a fait naître chez le consommateur l'habitude d'une information qui lui est spécifiquement destinée. Or, l'affichage des informations tel qu'il est actuellement pratiqué dans les surfaces de vente n'offre aucune interaction avec le consommateur.

Il n'existe aujourd'hui aucun moyen de diffuser des informations spécifiquement à l'attention d'un consommateur en relation avec sa position dans le magasin, voire avec un produit spécifique à ce consommateur

Le document WO 2006/035315 A1 (NOKIA CORP [FI]; NOKIA INC [US]; VESIKIVI PETRI [FI]; NYSTROEM SEBASTI) 6 avril 2006 (2006-04-06) fait partie de l'état de l'art pertinent.

### PRESENTATION DE L'INVENTION

La présente invention vise ainsi à proposer un moyen de fournir à un consommateur des informations spatialement localisées, en fonction de l'endroit et du contexte où se trouve ce consommateur, qui soient complémentaires des informations déjà visuellement disponibles dans une surface de vente. Un autre objectif est de pouvoir fournir au consommateur, sur le lieu de vente, des informations destinées spécifiquement à ce consommateur et personnalisées pour lui.

A cet effet, on propose selon un premier aspect un procédé de communication de données représentatives d'une information spatialement localisée à un terminal mobile en fonction de la localisation dudit terminal mobile dans une surface de vente munie d'une série d'étiquettes électroniques répartie selon la revendication indépendante 1.

L'invention selon le premier aspect est avantageusement mais facultativement complétée par les caractéristiques suivantes, prises seules ou en une quelconque de leur combinaison techniquement possible:
- le périphérique radiofréquence de l'étiquette électronique a une portée de communication inférieure à 20 cm ;
- l'établissement de la communication entre le terminal mobile et le périphérique radiofréquence comprend les étapes selon lesquelles :
   - un utilisateur amène le terminal mobile à proximité du périphérique radiofréquence de l'étiquette électronique, de sorte que le périphérique radiofréquence soit à portée d'ondes électromagnétiques émises par le terminal mobile,
   - ledit périphérique radiofréquence est activé par l'énergie des ondes électromagnétiques émises par le terminal mobile afin d'établir la communication par radiofréquence entre le périphérique radiofréquence de l'étiquette électronique et le terminal mobile ;
   - la communication entre le serveur central et le terminal mobile est établie via le réseau internet ;
   - les données représentatives d'une information spatialement localisée associée à la localisation dudit terminal mobile prennent en compte des données spécifiques à l'utilisateur du terminal mobile, préalablement stockées dans une base de données accessible par un réseau de communication.

Selon un second aspect, on propose également un système de communication de données localisées dans une surface de vente selon la revendication indépendante 6.

L'invention selon le second aspect est avantageusement mais facultativement complétée par les caractéristiques suivantes, prises seules ou en une quelconque de leur combinaison techniquement possible:
- ladite étiquette électronique comporte également
   - un module de communication radiofréquence pour recevoir des données représentatives d'informations relatives à un article en provenance d'une station centrale,
   - une mémoire pour stocker lesdites données,
   - un microcontrôleur pour commander l'affichage des informations relatives à un article,
   - un écran d'affichage pour l'affichage desdites informations relatives à un article ;
- le périphérique radiofréquence de l'étiquette électronique comprend une antenne et une puce électronique de type NFC ou RFID ;
- la puce et l'antenne sont agencées en des endroits différents de l'étiquette électronique, des connexions assurant la liaison entre l'antenne et la puce ;
- la puce est connectée à un microcontrôleur de l'étiquette électronique, et l'antenne est disposée sur ou dans un boîtier à l'intérieur duquel est logé ledit microcontrôleur ;
- le terminal mobile est adapté pour transmettre des données à l'étiquette électronique via le périphérique radiofréquence de ladite étiquette électronique.

### PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels:
- la figure 1 est un schéma illustrant le système selon un mode de réalisation possible du second aspect de l'invention ;
- la figure 2 est un schéma illustrant une vue de l'avant d'une étiquette électronique d'un système selon un mode de réalisation possible du second aspect de l'invention;
- la figure 3 est une vue par transparence de l'arrière d'une étiquette électronique d'un système selon un mode de réalisation possible du second aspect de l'invention ;

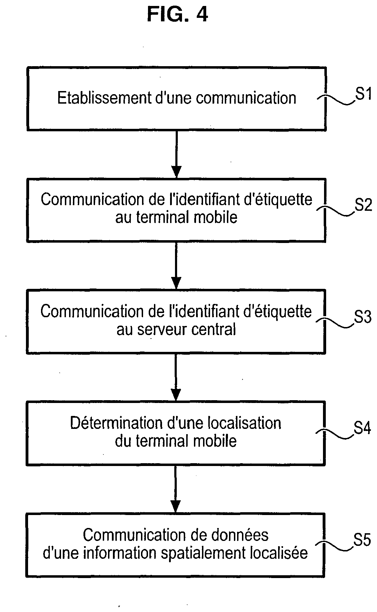

- la figure 4 est un schéma illustrant la mise en œuvre du procédé selon le premier aspect de l'invention.

### DESCRIPTION DETAILLEE

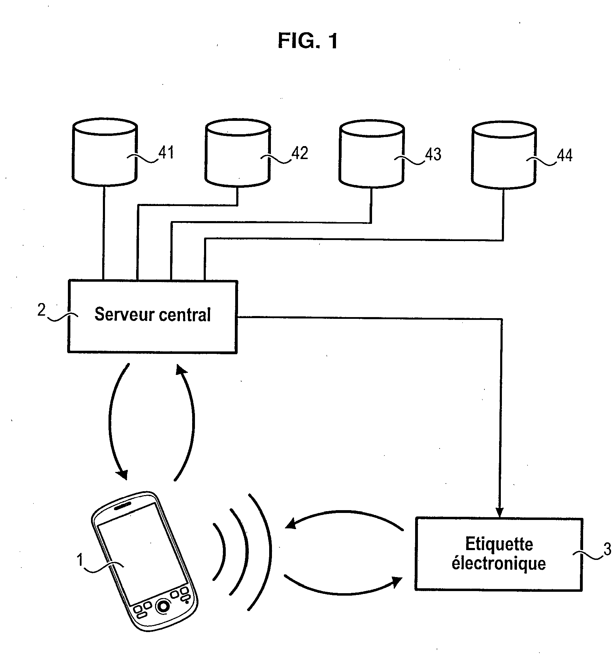

Sur la figure 1 est représenté, dans un but illustratif et non limitatif, un système de communication de données représentatives d'une information spatialement localisée dans une surface de vente, correspondant à un mode de réalisation possible de l'invention.

Le système illustré comprend un terminal mobile 1 apte à communiquer avec un serveur central 2. Ce terminal mobile 1 est de préférence muni de moyens d'affichage d'informations, tel qu'un écran, à destination d'un utilisateur dudit terminal mobile 1.

La communication entre le terminal mobile 1 et le serveur central 2 peut être établi au moyen de tout réseau de communication au moins partiellement sans fil, notamment via un réseau sans fil de type WIFI ou 3G. Ainsi la communication peut être établie en passant par le réseau internet auquel est relié le serveur central 2.

Afin de faciliter cette communication, la surface de vente peut disposer de bornes WIFI établissant une connexion entre le terminal mobile 1 et le réseau internet auquel est connecté le serveur central 2.

Un exemple courant d'un tel terminal mobile 1 est un téléphone portable de type smartphone, qui offre à la fois des possibilités de connexion et de traitement d'informations appropriées. En outre, la généralisation de ce type de téléphone permet à un grand nombre de consommateurs d'utiliser leur propre terminal mobile 1. D'autres terminaux mobiles peuvent être utilisés dès lors qu'ils répondent aux exigences de communicabilité avec le serveur central et de capacité d'afficher des informations à leur utilisateur. Par exemple, une tablette tactile peut être utilisée en tant que terminal mobile 1.

Le système comprend également une série d'étiquettes électroniques répartie dans la surface de vente. Les étiquettes présentent une forte densité spatiale, typiquement une dizaine d'étiquettes/m² en moyenne avec une variabilité importante.

Chaque étiquette électronique 3 est identifiée par un unique identifiant d'étiquette qui lui est propre. Cette identifiant d'étiquette permet donc d'identifier de manière univoque une seule et unique étiquette de la surface de vente.

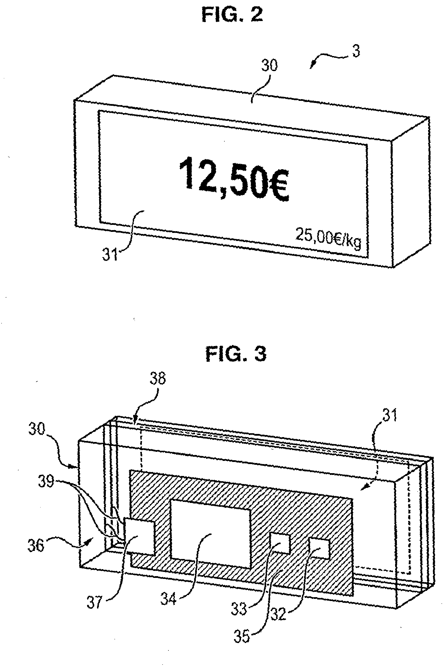

Les figures 2 et 3 illustrent un exemple d'étiquette électronique 2 dans le cadre de l'invention. Une telle étiquette électronique comporte un écran d'affichage 31 pour l'affichage d'informations relatives à un article auquel elle est associée. Typiquement, et ainsi qu'illustré sur la figure 2, ces informations comprennent le prix de l'article, et d'autres informations habituellement disponibles dans une surface de vente, par exemple le prix par kilogramme pour un produit alimentaire. L'étiquette électronique comporte également un boîtier 30 en plastique à l'intérieur duquel sont logés les constituants fonctionnels de l'étiquette électronique 3.

Notamment, l'étiquette électronique 3 comporte un module de communication radiofréquence 32 pour recevoir des données représentatives d'informations relatives à un article en provenance d'une station centrale, une mémoire 33 pour stocker lesdites données, et un microcontrôleur 34 pour commander l'affichage des informations relatives à l'article. Ces différents constituants fonctionnels sont disposés sur une carte de circuit imprimé 35 logée dans le boîtier 30.

L'étiquette électronique 3 de ladite série d'étiquettes électroniques comporte également un périphérique radiofréquence 36 avec lequel le terminal mobile 1 peut établir une communication pour acquérir l'identifiant d'étiquette de ladite étiquette électronique 3.

Le périphérique radiofréquence 36 de l'étiquette électronique 3 comprend une antenne 38 et une puce électronique 37 de type NFC (acronyme de l'anglais Near Field Communication pour communication en champ proche) ou RFID (acronyme de l'anglais Radio Frequency Identification pour identification radiofréquence).

Un périphérique radiofréquence de type NFC fonctionne avec une fréquence de 13,56 Mhz comme un périphérique radiofréquence de type RFID HF.

Un périphérique radiofréquence de type NFC correspond au protocole ISO 14443, très sécurisé avec cryptage. La communication par NFC tend à se répandre dans les terminaux mobiles personnels tels que les téléphones portables, et par conséquent offre l'avantage d'un déploiement massif.

L'application qui en est faite dans les étiquettes électroniques 3 ne nécessitant pas de niveau de sécurité élevé, un périphérique radiofréquence de type RFID HF (protocole ISO 15693) est tout à fait adapté à cet usage et son plus faible coût le rend plus attractif.

Les terminaux mobiles dotés de NFC ne supportaient initialement que le protocole ISO 14443 mais les nouveaux appareils sont majoritairement bi-modes et il est à prévoir que le développement futur sera à la bi-modalité.

De préférence, la puce 37 et l'antenne 38 sont agencées en des endroits différents de l'étiquette électronique 3, des connexions 39 assurant la liaison entre l'antenne 38 et la puce 37.

De préférence encore, la puce 37 est connectée au microcontrôleur 34 de l'étiquette électronique 3, et l'antenne 38 est disposée sur ou dans le boîtier 30 à l'intérieur duquel est logé ledit microcontrôleur 34. De préférence encore, l'antenne 38 est disposée du côté de la face avant de l'étiquette électronique 3, vers son écran d'affichage 31, tandis que la puce électronique 37 est disposée sur la carte de circuit imprimé 35, du côté de la face arrière de l'étiquette électronique 3.

En effet, l'intégration d'un périphérique radiofréquence 36 rassemblant sur un même support puce et antenne n'est pas souhaitable sur la face avant de l'étiquette électronique 3, car préjudiciable à la maximisation de la surface d'affichage de l'écran d'affichage 31, afin notamment de permettre la densification des étiquettes électroniques 3 sur une gondole de présentation d'articles, spécialement dans le cas de petits articles.

En outre, la connectique entre la puce électronique 37 et le microcontrôleur 34 peut être complexe et délicate à réaliser industriellement à un coût réduit. La puce 37 est alors de préférence implantée sur la carte de circuit imprimé, facilitant ainsi la connexion de celle-ci au microcontrôleur 34.

Cependant, un positionnement de l'antenne sur la face arrière à l'intérieur à côté de la puce 37 réduirait la distance et la fiabilité de lecture puisque celle-ci devrait alors se faire à travers l'écran d'affichage 31 de l'étiquette électronique 3 (typiquement d'une épaisseur de 1cm) et les perturbations électromagnétiques induites par la carte de circuit imprimé.

Il est donc préférable de séparer l'antenne 38 de la puce 37. La puce 37 est alors de préférence implantée sur la carte de circuit imprimé, facilitant ainsi la connexion de celle-ci au microcontrôleur 34.

L'antenne 38 est donc de préférence intégrée dans le boitier 30 en plastique, vers l'avant de celui-ci, préférentiellement autour de la réserve accueillant l'écran d'affichage 31 et surmoulée à l'injection lors de la fabrication du boîtier 30. La taille de l'antenne 38 peut être maximisée et ainsi permettre d'augmenter la distance de communication.

Cependant, dans tous les cas, cette distance de communication avec le périphérique radiofréquence 36 sera choisie relativement faible, inférieur à 20 cm, et de préférence encore inférieure à 10 cm, par rapport à l'antenne 38.

De préférence, le terminal mobile 1 est adapté pour transmettre des données à l'étiquette électronique 3 via le périphérique radiofréquence 36 de ladite étiquette électronique 3. Ainsi, l'affichage de l'étiquette électronique 3 peut être mis à jour par le terminal mobile 1.

Le système de communication de données représentatives d'une information spatialement localisée dans une surface de vente est configuré pour mettre en œuvre le procédé selon le premier aspect de l'invention, dont un mode de réalisation possible va être décrit.

Le procédé permet de communiquer des données représentatives d'une information spatialement localisée au terminal mobile 1 en fonction de la localisation dudit terminal mobile 1 dans une surface de vente munie d'une série d'étiquettes électroniques 3 répartie, chaque étiquette électronique 3 étant identifiée par un unique identifiant d'étiquette qui lui est propre.

Premièrement, le terminal mobile 1 établit une communication par radiofréquence avec un périphérique radiofréquence 36 d'une étiquette électronique 3 (étape S1).

Pour ce faire, un utilisateur, amène le terminal mobile 1 à proximité du périphérique radiofréquence 36 de l'étiquette électronique 3, de sorte que le périphérique radiofréquence 36 soit à portée d'ondes électromagnétiques émises par le terminal mobile 1.

Le périphérique radiofréquence 36 est alors activé par l'énergie des ondes électromagnétiques émises par le terminal mobile 1 afin d'établir une communication par radiofréquence avec le périphérique radiofréquence 36 de l'étiquette électronique 3.

Le périphérique radiofréquence 36 de ladite étiquette électronique 3 communique ensuite audit terminal mobile 1 un identifiant d'étiquette de ladite étiquette électronique 3 (étape S2). Cet identifiant d'étiquette peut être communiqué seul, ou accompagné d'autres informations, ou bien encore par la communication de données, qui sont au moins partiellement générées à partir dudit identifiant, et qui permettent d'identifier l'étiquette électronique 3 dans la surface de vente.

Le terminal mobile 1 communique ledit identifiant d'étiquette à un serveur central 2 (étape S3). De la même manière, les données communiquées doivent permettre d'identifier l'étiquette électronique 3 dans la surface de vente, et ne prennent pas nécessairement la forme du seul identifiant d'étiquette. Ainsi, les données échangées entre le terminal mobile 1 et le serveur central 2 peuvent être les mêmes ou bien être différentes de celles échangées entre l'étiquette électronique 3 et le terminal mobile 1, la seule exigence étant la possibilité d'identification de l'étiquette électronique 3 dans la surface de vente.

Le serveur central 2 détermine une localisation dudit terminal mobile 1 à partir de l'identifiant d'étiquette de ladite étiquette électronique 3 (étape S4). Le serveur central 2 détermine alors une localisation dudit terminal mobile 1 à partir de l'identifiant de ladite étiquette électronique 3 au moyen de données d'un planogramme associant une localisation à l'identifiant d'étiquette. Un planogramme répertorie la localisation de l'ensemble des étiquettes électroniques 3, ainsi que des articles présents dans la surface de vente.

Jusqu'à 10% des articles d'une surface de vente peuvent être présents à plusieurs emplacements distincts, et par conséquent, la seule connaissance de l'article, par exemple par un identifiant d'article tel qu'un code barre ou un code produit électronique (ou EPC pour l'anglais Electronic Product Code), ne permet pas de déterminer la localisation précise du terminal mobile 1.

L'unicité de l'identifiant d'étiquette et de la localisation associée à chaque étiquette électronique 3 permet en revanche de déterminer de façon univoque la localisation de l'étiquette électronique 3 à partir de son identifiant, et par conséquent de déterminer la localisation du terminal mobile 1.

En effet, le terminal mobile 1 se trouve à proximité immédiate de l'étiquette électronique 3 duquel il a acquis l'identifiant, de sorte que la localisation de l'étiquette permet de déterminer la localisation du terminal mobile 1.

De fait, la portée de communication du périphérique radiofréquence 36 est de préférence inférieure à 20 cm, de préférence encore inférieure à 10 cm, voire 5 cm. En effet, une portée relativement faible d'une part assure la correspondance entre la localisation de l'étiquette électronique 3 et le terminal mobile 1, et d'autre part permet de limiter les interférences entre des étiquettes électroniques lorsqu'elles sont proches les unes des autres.

De plus, une faible portée nécessite une action volontaire de l'utilisateur du terminal mobile 1 pour l'établissement de la communication entre le terminal mobile 1 et l'étiquette électronique 3. L'utilisateur n'a dès lors pas à craindre pour la protection de sa vie privée, et le système se révélant peu intrusif, est difficilement détournable de sa vocation première exposée dans cette description.

Une fois la localisation du terminal mobile 1 déterminée, le serveur central 2 communique au terminal mobile 1 des données représentatives d'une information spatialement localisée associée à la localisation dudit terminal mobile 1 (étape S5).

Ces données représentatives d'une information spatialement localisée associée à la localisation dudit terminal mobile 1 peuvent prendre en compte des données spécifiques à l'utilisateur du terminal mobile 1, préalablement stockées dans une base de données 41, 44 accessible par un réseau de communication.

Par exemple, une base de données 41 peut comprendre une liste de course préalablement définie par l'utilisateur, et la base de données 44 peut comprendre des données de santé entrées par l'utilisateur, au moyen desquelles des informations sur des articles peuvent être mises en correspondance avec des informations personnelles, par exemple des contre-indications médicales telle que la présence d'allergènes spécifiés par l'utilisateur.

D'autres bases de données 42, 43 peuvent être utilisées, et comprendre notamment le planogramme, des informations relatives aux articles, relatives à la surface de vente, etc...

Ainsi, l'étiquette électronique peut être utilisée comme un capteur de contexte, puisqu'elle permet de déterminer le contexte du terminal mobile avec lequel elle est en communication.

On peut dès lors prévoir par exemple une application web pour délivrer au terminal mobile des informations relatives à l'article à proximité duquel se trouve le terminal mobile, et donc l'utilisateur dudit terminal mobile, notamment des fiches techniques, des recettes de cuisine ou encore une proposition de produit de substitution ou des offres promotionnelles complémentaires.

L'utilisateur peut également bénéficier d'une application web prenant en compte les articles dont les identifiants d'étiquettes associées ont été acquis par le terminal mobile 1, par exemple pour afficher le prix total desdits articles lors d'une session d'achat.

On peut aussi prévoir une application web capable de mettre à jour une liste de courses au fur et à mesure de l'acquisition d'identifiants d'étiquettes associées à des articles de cette liste de course. Connaissant la localisation du terminal mobile 1, il est alors possible d'indiquer à l'utilisateur la direction d'un article présent sur sa liste de course, et par conséquent de planifier le déplacement de l'utilisateur dans la surface de vente.

Plus généralement, la connaissance de la localisation du terminal mobile 1, donc de son utilisateur, permet de fournir audit terminal mobile 1 des informations spatialement localisées, comme le chemin à suivre pour atteindre un article précis.

La localisation au moyen des étiquettes électroniques 3 permet une granulosité de repères jamais atteinte par des systèmes de localisation de type GPS. En effet, chaque mètre de gondole de présentation de produit disposant de plusieurs étiquettes 3 à des hauteurs différentes, il est même possible de localiser la hauteur du terminal mobile 1.

Par exemple, en recherche d'un article particulier, l'utilisateur approche son terminal mobile 1 d'une étiquette électronique 3. La mise en œuvre du procédé selon l'invention permet de communiquer au terminal mobile 1 des informations sur l'emplacement du produit recherché, relativement au terminal mobile 1. On indique par exemple par une flèche selon une direction diagonale haut/droite et une indication de distance, par exemple 50 cm, pour indiquer que l'article recherché par l'utilisateur se trouve en haut à droite de la position actuelle du terminal mobile 1, à une distance de 50 cm de celui-ci.

On peut également mettre en œuvre un paiement sécurisé au moyen du terminal mobile 1 grâce au relevé des identifiants d'étiquettes électroniques correspondant aux articles que l'utilisateur désire acheter. Il suffit alors d'une communication avec un système de paiement lorsque l'utilisateur quitte la surface de vente.

L'invention permet également aux utilisateurs de se voir proposer une surface de vente avec une configuration optimisée. En effet, le gestionnaire d'une surface de vente peut connaître les déplacements et comportements précis des utilisateurs de terminaux mobiles 1, et déterminer ainsi une configuration de surface de vente optimisée en fonction de ces informations.

Selon un mode de réalisation facultatif, l'affichage de l'étiquette électronique 3 peut être modifié lors de la communication avec le terminal mobile 1. Par exemple, on peut prévoir un affichage plus lumineux ou avec des informations particulières dès lors qu'un périphérique radiofréquence 36 communique avec un terminal mobile 1.

De préférence, le terminal mobile est adapté pour transmettre des données à l'étiquette électronique 3 via le périphérique radiofréquence 36 de ladite étiquette électronique 3, notamment pour mettre à jour les données et éventuellement la position de l'étiquette électronique lorsque le terminal mobile 1 est utilisé par un employé de la surface de vente.

## Revendications

1. Procédé de communication de données représentatives d'une information spatialement localisée à un terminal mobile (1) en fonction de la localisation dudit terminal mobile (1) dans une surface de vente munie d'une série d'étiquettes électroniques (3) répartie, chaque étiquette électronique (3) étant identifiée par un unique identifiant d'étiquette qui lui est propre,
ledit procédé comprenant les étapes selon lesquelles :
- un terminal mobile (1) établit une communication (S1) par radiofréquence avec un périphérique radiofréquence (36) d'une étiquette électronique (3),
- le périphérique radiofréquence (36) de ladite étiquette électronique (3) communique (S2) audit terminal mobile (1) un identifiant d'étiquette de ladite étiquette électronique (3),
- le terminal mobile (1) communique (S3) ledit identifiant d'étiquette à un serveur central (2), ledit serveur central (2) comprenant un planogramme associant à chaque identifiant d'étiquette une localisation unique qui lui est propre, ladite localisation unique comprenant une hauteur de ladite étiquette électronique (3) dans une gondole de la surface de vente,
- le serveur central (2) détermine (S4) une localisation dudit terminal mobile (1) à partir de l'identifiant d'étiquette de ladite étiquette électronique (3), au moyen de données du planogramme associant à l'identifiant d'étiquette une localisation unique qui lui est propre, la localisation ainsi déterminée dudit terminal mobile (1) comprenant une hauteur dudit terminal mobile (1) déterminée à partir de la hauteur de ladite étiquette électronique (3),
- le serveur central (2) communique (S5) au terminal mobile (1) des données représentatives d'une information spatialement localisée associée à la localisation dudit terminal mobile (1).

2. Procédé selon la revendication 1, dans lequel le périphérique radiofréquence (36) de l'étiquette électronique (36) a une portée de communication inférieure à 20 cm.

3. Procédé selon l'une des revendications 1 à 2, dans lequel l'établissement de la communication entre le terminal mobile (1) et le périphérique radiofréquence (36) comprend les étapes selon lesquelles :
- un utilisateur amène le terminal mobile (1) à proximité du périphérique radiofréquence (36) de l'étiquette électronique (3), de sorte que le périphérique radiofréquence (36) soit à portée d'ondes électromagnétiques émises par le terminal mobile (1),
- ledit périphérique radiofréquence (36) est activé par l'énergie des ondes électromagnétiques émises par le terminal mobile (1) afin d'établir la communication par radiofréquence entre le périphérique radiofréquence (36) de l'étiquette électronique (3) et le terminal mobile (1).

4. Procédé selon l'une des revendications 1 à 3, dans lequel la communication entre le serveur central (2) et le terminal mobile (1) est établie via le réseau internet.

5. Procédé selon l'une des revendications 1 à 4, dans lequel les données représentatives d'une information spatialement localisée associée à la localisation dudit terminal mobile (1) prennent en compte des données spécifiques à l'utilisateur du terminal mobile (1), préalablement stockées dans une base de données (41, 44) accessible par un réseau de communication.

6. Système de communication de données localisées dans une surface de vente comprenant :
- un terminal mobile (1) apte à communiquer avec un serveur central (2),
- une série d'étiquettes électroniques (3) répartie dans la surface de vente, chaque étiquette électronique (3) étant identifiée par un unique identifiant d'étiquette qui lui est propre,
une étiquette électronique (3) de ladite série d'étiquettes électroniques (3) comportant également un périphérique radiofréquence (36) avec lequel le terminal mobile (1) peut établir une communication pour acquérir l'identifiant d'étiquette de ladite étiquette électronique (3),
- un serveur central (2) comprenant un planogramme dans lequel chaque identifiant d'étiquette est associé à une localisation unique qui lui est propre, ladite localisation unique comprenant une hauteur, dans une gondole de la surface de vente, de l'étiquette électronique (3) identifiée par ledit identifiant d'étiquette,
le système étant configuré pour mettre en œuvre le procédé selon l'une quelconque des revendications 1 à 5.

7. Système selon la revendication 6, dans lequel ladite étiquette électronique (3) comporte également :
- un module de communication radiofréquence (32) pour recevoir des données représentatives d'informations relatives à un article en provenance d'une station centrale (2),
- une mémoire (33) pour stocker lesdites données,
- un microcontrôleur (34) pour commander l'affichage des informations relatives à un article,
- un écran d'affichage (31) pour l'affichage desdites informations relatives à un article.

8. Système selon l'une des revendications 6 ou 7, dans lequel le périphérique radiofréquence (36) de l'étiquette électronique (3) comprend une antenne (38) et une puce électronique (37) de type NFC ou RFID.

9. Système selon la revendication 8, dans lequel la puce (37) et l'antenne (38) sont agencées en des endroits différents de l'étiquette électronique (3), des connexions (39) assurant la liaison entre l'antenne (38) et la puce (37).

10. Système selon la revendication 9, dans lequel la puce (37) est connectée à un microcontrôleur (34) de l'étiquette électronique (3), et l'antenne (38) est disposée sur ou dans un boîtier (30) à l'intérieur duquel est logé ledit microcontrôleur (34).

11. Système selon l'une des revendications 6 à 10, dans lequel le terminal mobile (1) est adapté pour transmettre des données à l'étiquette électronique (3) via le périphérique radiofréquence (36) de ladite étiquette électronique (3).

## Patentansprüche

1. Verfahren zum Übermitteln von Daten, die für räumlich lokalisierte Informationen repräsentativ sind, an ein mobiles Endgerät (1) in Abhängigkeit vom Standort des mobilen Endgeräts (1) auf einer Verkaufsfläche, die mit einer Reihe von verteilten elektronischen Etiketten (3) versehen ist, wobei jedes elektronische Etikett (3) durch eine eindeutige, ihm eigene Etikettenkennung identifiziert wird,
wobei das Verfahren die folgenden Schritte umfasst:
- ein mobiles Endgerät (1) baut eine Hochfrequenzkommunikation (S1) mit einem Hochfrequenzgerät (36) eines elektronischen Etiketts (3) auf,
- das Hochfrequenzgerät (36) des elektronischen Etiketts (3) übermittelt (S2) eine Etikettenkennung des elektronischen Etiketts (3) an das mobile Endgerät (1),
- das mobile Endgerät (1) übermittelt (S3) die Etikettenkennung an einen zentralen Server (2), wobei der zentrale Server (2) ein Planogramm umfasst, das jeder Etikettenkennung einen ihm eigenen eindeutigen Standort zuordnet, wobei der eindeutige Standort eine Höhe des elektronischen Etiketts (3) in einem Warenregal der Verkaufsfläche umfasst,
- der zentrale Server (2) bestimmt (S4) einen Standort des mobilen Endgeräts (1) aus der Etikettenkennung des elektronischen Etiketts (3), mithilfe von Daten aus dem Planogramm, das der Etikettenkennung einen eigenen eindeutigen Standort zuordnet, wobei der so bestimmte Standort des mobilen Endgeräts (1) eine Höhe des mobilen Endgeräts (1) umfasst, die ausgehend von der Höhe des elektronischen Etiketts (3) bestimmt wird,
- der zentrale Server (2) übermittelt (S5) dem mobilen Endgerät (1) Daten, die für räumlich lokalisierte Informationen repräsentativ sind, die dem Standort des mobilen Endgeräts (1) zugeordnet sind.

2. Verfahren nach Anspruch 1, wobei das Hochfrequenzgerät (36) des elektronischen Etiketts (3) eine Kommunikationsreichweite von weniger als 20 cm aufweist.

3. Verfahren nach einem der Ansprüche 1 bis 2, wobei das Aufbauen der Kommunikation zwischen dem mobilen Endgerät (1) und dem Hochfrequenzgerät (36) die folgenden Schritte umfasst:
- ein Benutzer bringt das mobile Endgerät (1) in die Nähe des Hochfrequenzgerätes (36) des elektronischen Etiketts (3), sodass sich das Hochfrequenzgerät (36) in Reichweite der vom mobilen Endgerät (1) ausgesendeten elektromagnetischen Wellen befindet,
- das Hochfrequenzgerät (36) wird durch die Energie der vom mobilen Endgerät (1) ausgesendeten elektromagnetischen Wellen aktiviert, um die Hochfrequenzkommunikation zwischen dem Hochfrequenzgerät (36) des elektronischen Etiketts (3) und dem mobilen Endgerät (1) aufzubauen.

4. Verfahren nach einem der Ansprüche 1 bis 3, wobei die Kommunikation zwischen dem zentralen Server (2) und dem mobilen Endgerät (1) über das Internet aufgebaut wird.

5. Verfahren nach einem der Ansprüche 1 bis 4, wobei die Daten, die für räumlich lokalisierte Informationen, die dem Standort des mobilen Endgeräts (1) zugeordnet sind, repräsentativ sind, Daten berücksichtigen, die für den Benutzer des mobilen Endgeräts (1) spezifisch sind und zuvor in einer Datenbank (41, 44) gespeichert wurden, auf die über ein Kommunikationsnetz zugegriffen werden kann.

6. System zur Übermittlung von Daten, die sich auf einer Verkaufsfläche befinden, umfassend:
- ein mobiles Endgerät (1), das in der Lage ist, mit einem zentralen Server (2) zu kommunizieren,
- eine Reihe von elektronischen Etiketten (3), die auf der Verkaufsfläche verteilt sind, wobei jedes elektronische Etikett (3) durch eine eindeutige, ihm eigene Etikettenkennung identifiziert wird,
wobei ein elektronisches Etikett (3) der Reihe von elektronischen Etiketten (3) auch ein Hochfrequenzgerät (36) enthält, mit dem das mobile Endgerät (1) eine Kommunikation aufbauen kann, um die Etikettenkennung des elektronischen Etiketts (3) zu erfassen,
- einen zentralen Server (2), der ein Planogramm umfasst, in dem jede Etikettenkennung einem eindeutigen Standort zugeordnet ist, wobei der eindeutige Standort eine Höhe des durch die Etikettenkennung identifizierten elektronischen Etiketts (3) in einem Warenregal der Verkaufsfläche umfasst,
wobei das System so konfiguriert ist, dass es das Verfahren nach einem der Ansprüche 1 bis 5 implementiert.

7. System nach Anspruch 6, wobei das elektronische Etikett (3) außerdem umfasst:
- ein Hochfrequenz-Kommunikationsmodul (32) zum Empfangen von Daten, die für Informationen zu einem Artikel repräsentativ sind, von einer zentralen Station (2),
- einen Speicher (33) zum Speichern der Daten,
- einen Mikrocontroller (34) zum Steuern der Anzeige der Informationen zu einem Artikel,
- einen Anzeigebildschirm (31) zum Anzeigen der Informationen zu einem Artikel.

8. System nach einem der Ansprüche 6 oder 7, wobei das Hochfrequenzgerät (36) des elektronischen Etiketts (3) eine Antenne (38) und einen elektronischen Chip (37) vom Typ NFC oder RFID umfasst.

9. System nach Anspruch 8, wobei der Chip (37) und die Antenne (38) an unterschiedlichen Stellen an dem elektronischen Etikett (3) angeordnet sind, wobei Anschlüsse (39) die Verbindung zwischen der Antenne (38) und dem Chip (37) herstellen.

10. System nach Anspruch 9, wobei der Chip (37) mit einem Mikrocontroller (34) des elektronischen Etiketts (3) verbunden ist und die Antenne (38) an oder in einem Gehäuse (30) angeordnet ist, in dem der Mikrocontroller (34) untergebracht ist.

11. System nach einem der Ansprüche 6 bis 10, wobei das mobile Endgerät (1) dafür angepasst ist, Daten über das Hochfrequenzgerät (36) des elektronischen Etiketts (3) an das elektronische Etikett (3) zu übertragen.

## Claims

1. A method for communicating data representing spatially localized information to a mobile terminal (1) in relation to the location of said mobile terminal (1) in a sales area equipped with a distributed series of electronic labels (3), each electronic label (3) being identified by a unique label identifier particular to said label,
said method comprising the steps in which:
- a mobile terminal (1) sets up a communication (S1) via radio-frequency with a radio-frequency peripheral (36) of an electronic label (3),
- the radio-frequency peripheral (36) of said electronic label (3) communicates (S2) to said mobile terminal (1) a label identifier of said electronic label (3),
- the mobile terminal (1) communicates (S3) said label identifier to a central server (2), said central server (2) comprising a planogram associating with each label identifier a unique location particular to it, said unique location comprising a height of said electronic label (3) in a shelving of the sales area,
- the central server (2) determines (S4) a location of said mobile terminal (1) from the label identifier of said electronic label (3), using data of the planogram associating with the label identifier a unique location particular to the label identifier, the thus determined location of said mobile terminal (1) comprising a height of said mobile terminal (1) determined from the height of said electronic label (3),
- the central server (2) communicates (S5) to the mobile terminal (1) data representing spatially localized information associated with the location of said mobile terminal (1).

2. The method according to claim 1, wherein the radio-frequency peripheral (36) of the electronic label (3) has a communication range of less than 20 cm.

3. The method according to any of claims 1 to 2, wherein the setting-up of the communication between the mobile terminal (1) and the radio-frequency peripheral (36) comprises the steps in which:
- a user brings the mobile terminal (1) close to the radio-frequency peripheral (36) of the electronic label (3), so that the radio-frequency peripheral (36) is within the range of the electromagnetic waves emitted by the mobile terminal (1),
- said radio-frequency peripheral (36) is activated by the energy of the electromagnetic waves emitted by the mobile terminal (1) in order to set up communication via radio-frequency between the radio-frequency peripheral (36) of the electronic label (3) and the mobile terminal (1).

4. The method according to any of claims 1 to 3, wherein the communication between the central server (2) and the mobile terminal (1) is set up via the internet.

5. The method according to any of claims 1 to 4, wherein the data representing spatially localized information associated with the location of said mobile terminal (1) take into account data specific to the user of the mobile terminal (1), previously stored in a database (41, 44) accessible via a communication network.

6. A system for communicating localized data within a sales area comprising:
- a mobile terminal (1) capable of communicating with a central server (2),
- a series of electronic labels (3) distributed throughout the sales area, each electronic label (3) being identified by a unique label identifier particular to it,
an electronic label (3) of said series of electronic labels (3) also comprising a radio-frequency peripheral (36) with which the mobile terminal (1) is able to set up a communication to acquire the label identifier of said electronic label (3),
- a central server (2) comprising a planogram in which each label identifier is associated with a unique location particular to it, said unique location comprising a height, in a shelving of the sales area, of the electronic label (3) identified by said label identifier,
the system being configured to implement the method according to any one of claims 1 to 5.

7. The system according to claim 6, wherein said electronic label (3) also comprises:
- a radio-frequency communication module (32) to receive data representing item-related information originating from a central station (2),
- a memory (33) to store said data,
- a microcontroller (34) to control the display of information relating to an item,
- a display screen (31) to display said item-related information.

8. The system according to any of claims 6 or 7, wherein the radio-frequency peripheral (36) of the electronic label (3) comprises an antenna (38) and an electronic chip (37) of NFC or RFID type.

9. The system according to claim 8, wherein the chip (37) and the antenna (38) are arranged at different points of the electronic label (3), wherein connections (39) ensure the link between the antenna (38) and the chip (37).

10. The system according to claim 9, wherein the chip (37) is connected to a microcontroller (34) of the electronic label (3), and the antenna (38) is arranged on or in a case (30) inside which said microcontroller (34) is housed.

11. The system according to any of claims 6 to 10, wherein the mobile terminal (1) is adapted to transmit data to the electronic label (3) via the radio-frequency peripheral (36) of said electronic label (3).
